# EUROPEAN PATENT SPECIFICATION

(11) **EP 2 930 982 B1**
(45) Date of publication and mention of the grant of the patent: **18.05.2016**
(21) Application number: 14290099.2
(22) Date of filing: 07.04.2014
(51) Int. Cl.: H04W 72/12, H04W 52/24, H04W 84/04

(54) **MITIGATING DL-UL INTERFERENCE**
MINDERUNG VON DL-UL-INTERFERENZEN
ATTÉNUATION DES INTERFÉRENCES DL-UL

(43) Date of publication of application: 14.10.2015
(73) Proprietor: ALCATEL LUCENT, 92100 Boulogne-Billancourt (FR)
(72) Inventor: Claussen, Holger, 15 Dublin (IE); Lopez-Perez, David, 15 Dublin (IE)
(74) Representative: Berthier, Karine

(56) References cited:
- WO-A1-2013/177774
- WO-A1-2013/178037

## Description

### TECHNICAL FIELD

The present invention relates, in general, to the field of wireless telecommunications networks, and more specifically, although not exclusively, to full duplex communication within such networks.

### BACKGROUND

The useful part of the spectrum for wireless telecommunications is limited and is therefore an expensive commodity that cellular operators have spent large amounts on. As a result, they have a high interest in utilizing the spectrum as efficiently as possible. There are different approaches that can be used to increase the efficiency of spectrum use. Some examples are small cells, which are low-powered radio access nodes that can be used to offload traffic, multiple-input and multiple-output (MIMO) antennas, and improved data coding and modulation techniques. Using different frequency bands for transmission and reception was taken as given since the early beginnings of wireless communications, and not questioned much. However, recently, techniques to successfully receive and transmit signals simultaneously in the same frequency bands of operation have been proposed. Frequency resource allocation schemes can enable full-duplex communications in homogeneous macro-cellular networks, but a new type of physical layer interference emerges due to full-duplex communications, that is the inter-link interference between downlink (DL) and uplink (UL) transmissions, which can be an issue in heterogeneous and small cell networks. WO2013/177774 describes an eNB to eNB interference mitigation process in an asymmetric LTE deployment.

### SUMMARY

According to an example, there is provided a method, in a heterogeneous telecommunications network, for mitigating DL-UL interference between aggressor and victim nodes, respective nodes operable to transmit and receive using the same frequency bands at the same time so as to provide full-duplex communication, using multiple frequency resources, to serve pairs of UEs, the method including transmitting an interference indicator message (IIM) from the victim node to the aggressor node including data representing an indication that the victim node intends to schedule full-duplex communication with a pair of UEs using a selected one of the multiple frequency resources, wherein the aggressor node, on the basis of the IIM message, is operable to decrease transmission power or cease transmission for a predetermined period of time to a scheduled pair of UEs served by the aggressor node in the selected frequency resource, or share scheduling information and data to be scheduled with the victim node whereby to enable interference cancellation for DL-UL interference generated by the aggressor node. Scheduling information and data to be scheduled can be used at the victim node to estimate a channel activity in the selected frequency resource. The scheduling information and data to be scheduled can be transmitted from the aggressor node to the victim node using a wireless or wired connection between the nodes. The aggressor node can be operable to respond to receipt of the IIM message transmitted from the victim node with an interference cancellation usage request message. Received power in respective ones of the multiple frequency resources can be measured, at the victim node, to determine the presence of an acceptable frequency resource, and, on the basis of the determination, full-duplex communication with a pair of half-duplex UEs in the acceptable frequency resource can be scheduled. An acceptable frequency resource can be determined as a frequency resource in which a measure representing measured received power for the resource is lower than a predetermined threshold value, or in which SINR for a UE of the pair is larger than a threshold value. The channel between the nodes can be estimated using the scheduling information and data to be scheduled whereby to enable interference cancellation. Selected ones of multiple antenna elements of an aggressor node can be used to modify a DL transmission profile of the node whereby to mitigate interference effects of the UL transmission on the victim node.

According to an example, there is provided a heterogeneous telecommunications network including an aggressor and a victim node, respective nodes operable to transmit and receive using the same frequency bands at the same time so as to provide full-duplex communication, using multiple frequency resources, to serve pairs of UEs, wherein the victim node (101, 209) is operable to
transmit an interference indicator message (IIM) to the aggressor node, the message including data representing an indication that the victim node intends to schedule full-duplex communication with a pair of UEs using a selected one of the multiple frequency resources, wherein the aggressor node, on the basis of the IIM message, is operable to decrease transmission power or cease transmission for a predetermined period of time to a scheduled pair of UEs served by the aggressor node in the selected frequency resource, or share scheduling information and data to be scheduled with the victim node, and wherein the victim node is operable to use the scheduling information and data to be scheduled to enable interference cancellation for DL-UL interference generated by the aggressor node. The victim node can be operable to use the scheduling information and data to be scheduled at the victim node to estimate a channel activity in the selected frequency resource. The scheduling information and data to be scheduled can be transmitted from the aggressor node to the victim node using a wireless or wired connection between the nodes. The victim node can be operable to measure received power in respective ones of the multiple frequency resources, and to determine the presence of an acceptable frequency resource; and, on the basis of the determination, schedule full-duplex communication with a pair of UEs in the acceptable frequency resource.

According to an example, there is provided a full-duplex capable node in a heterogeneous telecommunications network operable to transmit and receive using the same frequency bands at the same time so as to provide full-duplex communication, using multiple frequency resources, to serve pairs of UEs, wherein the node is operable to transmit an interference indicator message (IIM) to an aggressor node of the network including data representing an indication that the node intends to schedule full-duplex communication with a pair of UEs using a selected one of the multiple frequency resources, and receive scheduling information and data to be scheduled from the aggressor node of the network so as to enable interference cancellation for DL-UL interference generated by the aggressor node.

According to an example, there is provided a full-duplex capable node in a heterogeneous telecommunications network operable to transmit and receive using the same frequency bands at the same time so as to provide full-duplex communication, using multiple frequency resources, to serve pairs of UEs, wherein the node is operable to receive an interference indicator message (IIM) including data representing an indication that a victim node of the network intends to schedule full-duplex communication with a pair of UEs using a selected one of the multiple frequency resources, and decrease transmission power or cease transmission for a predetermined period of time to a scheduled pair of UEs in the selected frequency resource, or transmit scheduling information and data to be scheduled to the victim node to enable interference cancellation for DL-UL interference generated by the node.

According to an example, there is provided a computer program product, comprising a computer usable medium having computer readable program code embodied therein, said computer readable program code adapted to be executed to implement a method for mitigating DL-UL interference between an aggressor node and a victim node as provided herein.

### BRIEF DESCRIPTION OF THE FIGURES

Embodiments will now be described, by way of example only, with reference to the accompanying drawings, in which:
Figure 1 is a schematic representation of a heterogeneous telecommunications network according to an example;
Figure 2 is a further schematic representation of a heterogeneous telecommunications network according to an example;
Figure 3 is a schematic representation of message flow between a victim node and an aggressor node according to an example;
Figure 4 is a further schematic representation of a heterogeneous telecommunications network according to an example, in which beam forming for interference mitigation is depicted; and
Figure 5 is a further schematic representation of a heterogeneous telecommunications network according to an example, in which beam forming for interference mitigation is depicted.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein. Accordingly, while embodiments can be modified in various ways and take on various alternative forms, specific embodiments thereof are shown in the drawings and described in detail below as examples. There is no intent to limit to the particular forms disclosed.

On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Full duplex wireless transmission can potentially double the available frequency spectrum for UE usage and be one additional way for increasing the wireless network capacity. This means that a base station node can transmit and receive using the same frequency bands at the same time. According to an example, a method for re-using frequencies is proposed that allows full duplex communication in a base station node with mobile UEs. The approach enables the full benefits of full duplex communication (up to 2x capacity increase in the same bandwidth) per base station, while retaining backwards compatibility with standard UEs.

Given a set of frequency resources and a set of cells or nodes with the capability of using full-duplex communications over the available set of frequency resources, inter-link interference can be generated by the downlink (DL) of one UE connected to one cell (the aggressor UE/cell) to the uplink (UL) of another UE connected to a different cell (the victim UE/cell). According to an example, DL-to-UL interference can be mitigated using interference coordination. More particularly, a given node, which can also be referred to as the aggressor base station for example, scheduling a cell-edge UE (referred to as the aggressor UE) with high power in the DL, and with this UE being proximate to or in the vicinity of one or more neighboring nodes (referred to as the victim cells), can transmit or provide a high interference indicator message (IIM) to such potential victim cell nodes indicating that they should refrain from scheduling UL transmissions to UEs that are in the vicinity of the aggressor UE since they may suffer from strong DL-to-UL interference. In an example, such IIM message can indicate the frequency resources to be used by the aggressing node and the timeframe.

Given a set of frequency resources and a set of cells with the capability of using full-duplex communications over the available set of frequency resources, and considering the inter-link interference generated by the DL of one cell (the aggressing cell) to the UL of another cell (the victim cell), DL-to-UL interference can be mitigated according to an example using:
- interference coordination - if the network load is low (there are some frequency resources available to provide inter-cell interference mitigation through scheduling decisions).
- interference cancellation - if the network load is high (there are no free frequency resources available to provide inter-cell interference mitigation through scheduling decisions).

According to an example, a given node (referred to as the reference node), scheduling a cell-edge UE in the DL, will send a high interference indicator (IIM) message to its neighboring cell nodes indicating that they should refrain from scheduling high power UL transmissions in the frequency resources allocated to such cell-edge UE in the DL and specified in the IIM message. If the neighboring cell nodes can serve their respective UEs in the UL without making use of the frequency resources specified in the IIM message, then DL-to-UL interference can be successfully mitigated through scheduling decisions.

Otherwise, the pertinent neighboring nodes will inform the reference node that they are willing to use such frequency resources and that it would be convenient to use interference cancellation capabilities to allow the co-existence of the DL and UL transmissions in all the involved cells. Since DL transmissions interfere with UL transmissions, the interfering data can be shared in the network, and in combination with channel estimates between two nodes, the interference can be cancelled accurately using known methods.

After negotiating whether interference cancellation capabilities can be used, if the negotiation is successful, the pertinent neighboring cell nodes establish a connection (through the core network or X2 interfaces for example) with the reference node, and they start shipping their scheduling information and the data to be scheduled to the reference node. The reference node also estimates the channel from the interfering node using the later pilot signals. In this way, reliable interference cancellation can be carried out at the reference node (the one that originally transmitted in the IIM message).

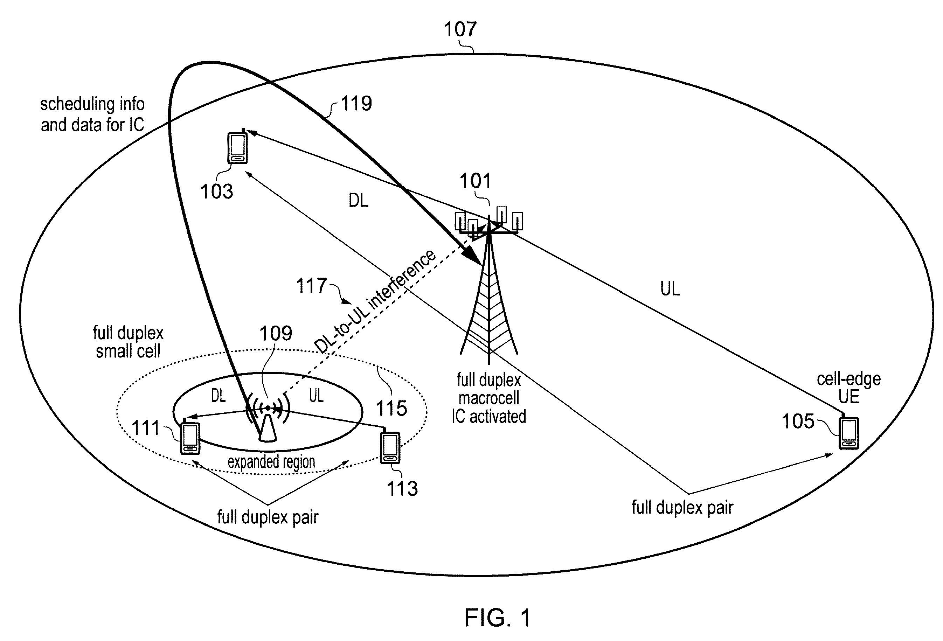

Figure 1 is a schematic representation of a heterogeneous telecommunications network according to an example. The example of figure 1 schematically depicts certain aspects of DL-small-cell to UL-macro-cell interference cancellation in a full-duplex network. More particularly, a full-duplex macro node 101 is operable to serve a pair of half-duplex UEs 103, 105 within a macro cell 107. A full-duplex small cell node 109 is operable to serve a pair of half-duplex UEs 111, 113 within a small cell 115, which can include an expanded region. In the example of figure 1, UE 105 communicates with node 101 in the uplink, and UE 103 communicates with node 101 in the downlink. Similarly, UE 113 communicates with node 109 in the uplink, and UE 111 communicates with node 109 in the downlink. Accordingly, DL-to-UL interference 117 can be present at node 101, which is therefore the victim node, as a result of the transmissions from node 109, which is the aggressor node in this sense. According to an example, node 109 can share scheduling information and data to be scheduled 119 with the victim node 101 whereby to enable interference cancellation for DL-UL interference generated by the full-duplex aggressor node 109.

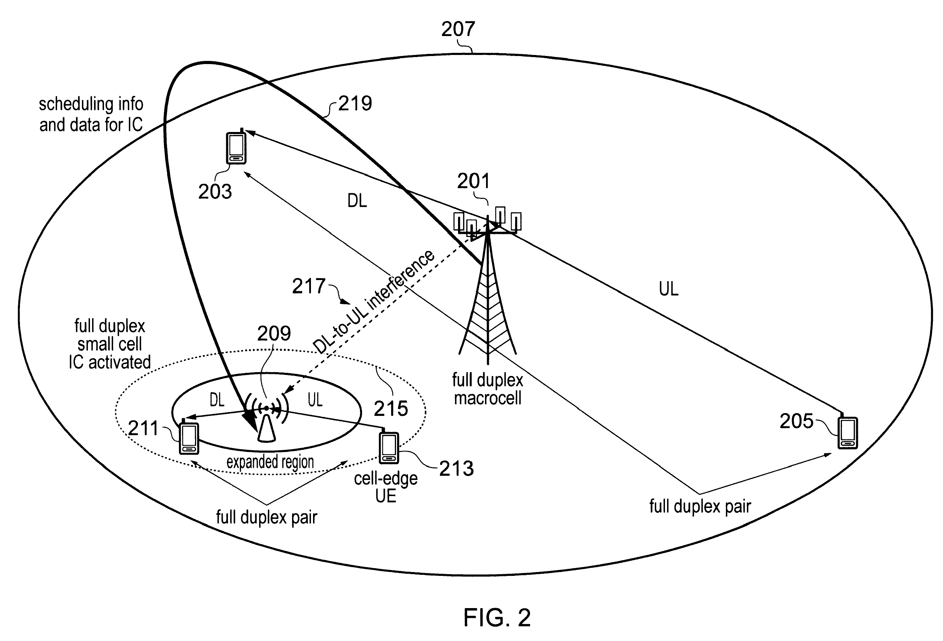

Figure 2 is a schematic representation of a heterogeneous telecommunications network according to an example. The example of figure 2 schematically depicts certain aspects of DL-macro-cell to UL-small-cell interference cancellation in a full-duplex network. More particularly, a full-duplex macro node 201 is operable to serve a pair of half-duplex UEs 203, 205 within a macro cell 207. A full-duplex small cell node 209 is operable to serve a pair of half-duplex UEs 211, 213 within a small cell 215, which can include an expanded region. In the example of figure 2, UE 205 communicates with node 201 in the uplink, and UE 203 communicates with node 201 in the downlink. Similarly, UE 213 communicates with node 209 in the uplink, and UE 211 communicates with node 209 in the downlink. Accordingly, DL-to-UL interference 217 can be present at node 209, which is therefore the victim node, as a result of the transmissions from node 201, which is the aggressor node in this sense. According to an example, node 201 can share scheduling information and data to be scheduled 219 with the victim node 209 whereby to enable interference cancellation for DL-UL interference generated by the full-duplex aggressor node 201.

According to an example, a connection between the aggressing and victim cells is used for the transfer of data for interference cancellation. This is therefore particularly suitable for, although not limited to operator-deployed cells with, for example, a fiber or radio link back-haul, or for remote radio heads of virtual RANs where the scheduler is located in a central unit.

Interference coordination and interference cancellation procedures according to an example help to realize the full benefits of full-duplex communications at the system level in heterogeneous and small cell networks (with 2 or more UEs per cell for example, which is the case in macro-cellular networks) by providing an up to 2 x capacity increase. Backwards compatibility with existing UEs is provided since standard transceivers can be used.

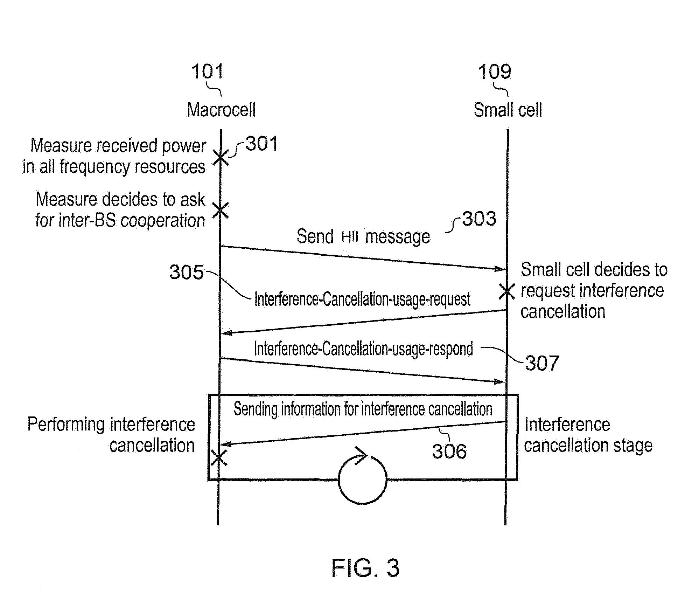

With reference to figure 1, as noted above, there is a full-duplex macrocell node 101, a full-duplex small cell node 109, and two frequency resources available, resource 1 and resource 2. The full-duplex small cell node 109 is serving a full-duplex pair of UEs (one DL UE 111 and one UL UE 113) in a given frequency resource, e.g., frequency resource 1, while the full-duplex macrocell node 101 is also willing to serve another full-duplex pair of UEs 103, 105. In this case, and with reference to figure 3, which is a schematic representation of message flow between macro cell node 101 (victim node) and small cell node 109 (aggressor node), the full-duplex macrocell node 101, which is about to perform a scheduling decision, follows the following procedure:
The full-duplex macrocell node 101 measures the received power in each frequency resource, 301. If the measured interference is low in some frequency resources, the full-duplex macrocell node 101 will schedule its full-duplex UE pair 103, 105 in the frequency resources suffering from an acceptable interference (such as for example, measured received power lower than a predetermined threshold value, or achievable UE SINR larger than a predetermined threshold value).

In the example of figure 1, the full-duplex macrocell node 101 will measure a higher received power in frequency resource 1 than in frequency resource 2 due to the DL-to-UL interference generated by the full-duplex UE pair 111, 113 scheduled in frequency resource 1 by the full-duplex small cell node 109. As a result, the full-duplex macrocell node 101 can allocate its full-duplex UE pair 103, 105 in frequency resource 2.

If the full-duplex macrocell node 101 cannot find any frequency resource suffering from low DL-to-UL interference (assume for example that frequency resource 1 and frequency resource 2 are occupied at the full-duplex small cell node 109), then it will issue an IIM message 303 to the full-duplex small cell node 109 indicating that it is willing to schedule a full-duplex UE pair in a given frequency resource, e.g., frequency resource 1.

Upon receiving the IIM message, the full-duplex small cell node 109 can attempt to cooperate with the full-duplex macrocell node 101 by decreasing the transmit power allocated in frequency resource 1 or stopping transmission on it for a given time (for example, the full-duplex small cell node 109 can schedule VoIP UEs in frequency resource 1, which does not require to transmit in every transmission time interval).

If the full-duplex small cell node 109 is not willing to 'sacrifice' any of the frequency resources due to its high load conditions (or priority of its UEs), then it will respond to the IIM message of the full-duplex macrocell node 101 with an interference cancellation-usage-request message 305. By sending this message, the full-duplex small cell node 109 attempts to engage in close cooperation with the macrocell node 101 and forward (306) its scheduling information and data to be scheduled 119 to the full-duplex macrocell node 101 so that the full-duplex macrocell node 101 can perform interference cancellation and cancel the DL-to-UL interference generated by the full-duplex small cell node 109. In an example, channel estimation between nodes using the scheduling information and data to be scheduled includes estimating received power and signal phase.

Upon receiving the interference-cancellation-usage-request 305, if the full-duplex macrocell node 101 is willing to perform such interference cancellation, it will answer back to the small cell node 109 with an IC-usage-response-ACK 307, in which the necessary information for connection establishment and some other relevant information for this operation (e.g., frequency resources over which IC should be performed and for how many TTIs) is indicated. Note that the full-duplex macrocell node 101 may decide to avoid using interference cancellation (e.g., UE requirements are not so stringent, there is no proper connection between both nodes, etc.) and thus it will reply with an IC-usage-response-NACK (not shown).

Upon receiving the interference-cancellation-usage-respond-ACK 307 and establishing a connection between both nodes101, 109, the full-duplex small cell node 109 will start forwarding its scheduling information and data to be scheduled 119 to the full-duplex macrocell node 101, and the full-duplex macrocell node 101 can start estimating the channel from the interfering full-duplex small cell node 109 using the later pilot signals (the small cell node will only forward data related to the indicated frequency resources that need interference cancellation). In this way, the full-duplex macrocell node 101 can perform interference cancellation and cancel the DL-to-UL interference in the pertinent frequency resources.

The above described procedure with reference to figure 1 and 3 also applies to the scenario in figure 2 where the full-duplex macrocell node 201 is the aggressing cell and the full-duplex small cell node 209 is the victim cell and triggering the IIM message. That is, a method according to an example works in 'both directions', that is between a macro cell node and a small cell node and vice-versa.

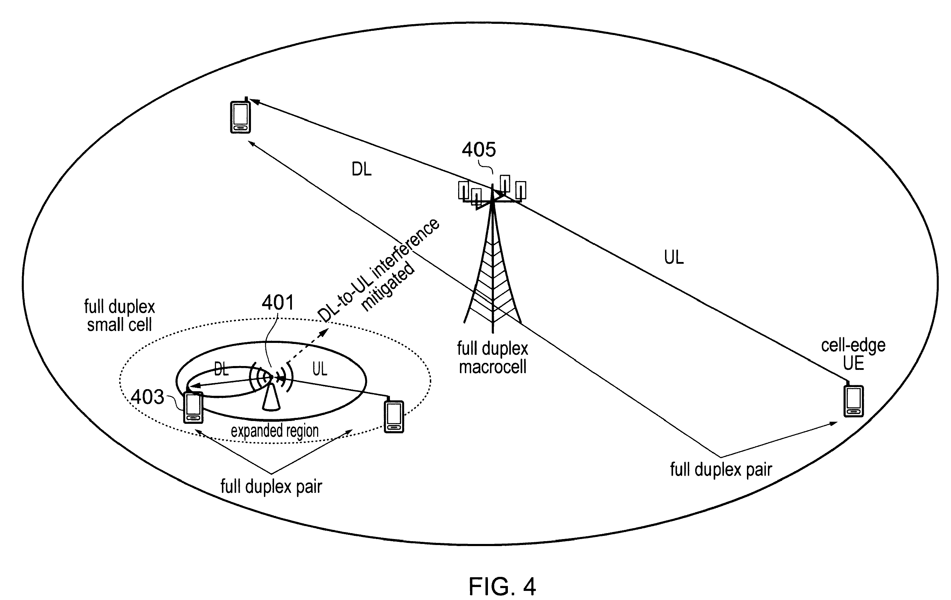

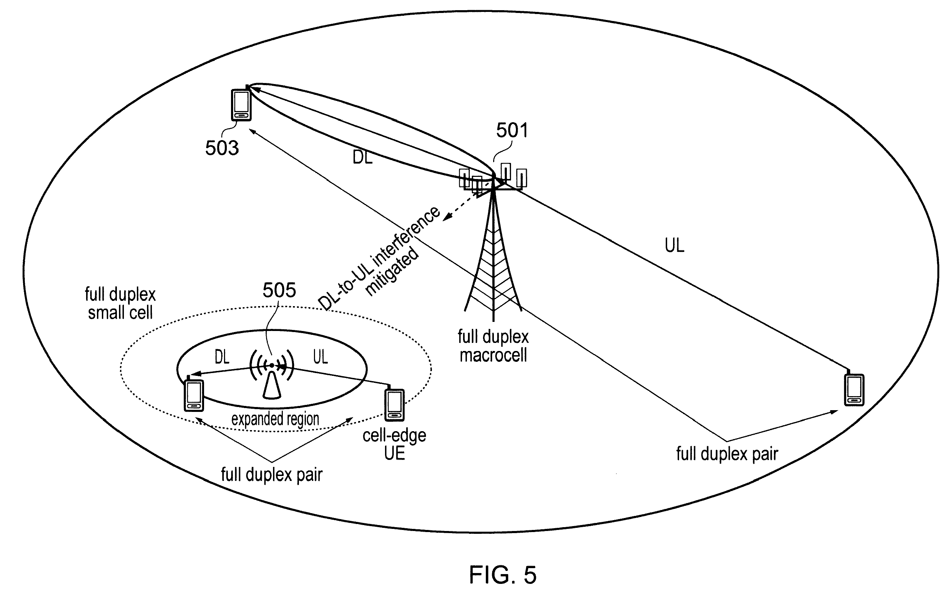

The process can also be applied using the same principles to sectorized nodes to increase spatial re-use at such nodes. Nodes could also use beam-forming to point DL beams towards intended UEs and avoid creating DL-to-UL interference to neighboring nodes. For example, figure 4 is a schematic representation of a heterogeneous telecommunications network according to an example, and in which a small cell node 401 includes an antenna with multiple antenna elements respective ones or groups of which can be selected to modify a transmission profile of the node 401. As noted in the example of figure 4, selected antenna elements are used to modify the transmission profile of the node 401 such that DL transmissions to a UE 403 have a directional profile thereby mitigating interference effects of the UL transmission on node 405. Similarly, figure 5 is a schematic representation of a heterogeneous telecommunications network according to an example, and in which a macro cell node 501 includes an antenna with multiple antenna elements respective ones or groups of which can be selected to modify a transmission profile of the node 501. As noted in the example of figure 5, selected antenna elements are used to modify the transmission profile of the node 501 such that DL transmissions to a UE 503 have a directional profile thereby mitigating interference effects of the UL transmission on node 505.

In either case, note that when the DL UE, for which the data is intended and for which the beam-forming is done, is in the line between the full duplex aggressing node (the one doing the beam-forming) and the full-duplex victim node, interference mitigation via beam-forming will not work and interference cancellation can be used. This is because the beam-formed node antenna lobes, to reach the intended UE, will also point towards the victim node, thus increasing interference.

The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope. The methods and systems as described herein can be applied using different air interface technology such as for example GSM, LTE and so on, and can be applied to the whole available frequency spectrum or parts of the spectrum.

## Claims

1. A method, in a heterogeneous telecommunications network, for mitigating DL-UL interference between aggressor (109, 201) and victim (101, 209) nodes, respective nodes operable to transmit and receive using the same frequency bands at the same time so as to provide full-duplex communication, using multiple frequency resources, to serve pairs of UEs, the method including:
transmitting an interference indicator message, IIM, (303) from the victim node (101, 209) to the aggressor node (109, 201) including data representing an indication that the victim node (101, 209) intends to schedule full-duplex communication with a pair of UEs (103, 105; 211, 215) using a selected one of the multiple frequency resources, wherein the aggressor node (109, 201), on the basis of the IIM message (303), is operable to decrease transmission power or cease transmission for a predetermined period of time to a scheduled pair of UEs (111, 115; 203, 205) served by the aggressor node (109, 201) in the selected frequency resource, or share scheduling information and data to be scheduled (119, 219) with the victim node (101, 209) whereby to enable interference cancellation for DL-UL interference generated by the aggressor node (109, 201).

2. A method as claimed in claim 1, further including, using the scheduling information and data to be scheduled (119, 219) at the victim node (101, 209) to estimate a channel activity in the selected frequency resource.

3. A method as claimed in claim 1 or 2, wherein the scheduling information and data to be scheduled (119, 219) is transmitted from the aggressor node (109, 201) to the victim node (101, 209) using a wireless or wired connection between the nodes.

4. A method as claimed in any preceding claim, wherein the aggressor node (109, 201) is operable to respond to receipt of the IIM message (303) transmitted from the victim node (101, 209) with an interference cancellation usage request message (305).

5. A method as claimed in any preceding claim, further including:
measuring, at the victim node (101, 209), received power in respective ones of the multiple frequency resources to determine the presence of an acceptable frequency resource; and, on the basis of the determination, scheduling full-duplex communication with a pair of UEs in the acceptable frequency resource.

6. A method as claimed in claim 5, wherein an acceptable frequency resource is determined as a frequency resource in which a measure representing measured received power for the resource is lower than a predetermined threshold value, or in which SINR for a UE of the pair is larger than a threshold value.

7. A method as claimed in any preceding claim, further including estimating the channel between the nodes using the scheduling information and data to be scheduled whereby to enable interference cancellation.

8. A method as claimed in any preceding claim, further comprising using selected ones of multiple antenna elements of an aggressor node (109, 201, 401, 501) to modify a DL transmission profile of the node whereby to mitigate interference effects of the UL transmission on the victim node (101, 209, 405, 505).

9. A heterogeneous telecommunications network including an aggressor (109, 201) and a victim (101, 209) node, respective nodes operable to transmit and receive using the same frequency bands at the same time so as to provide full-duplex communication, using multiple frequency resources, to serve pairs of UEs, wherein the victim node (101, 209) is operable to:
transmit an interference indicator message, IIM, (303) to the aggressor node (109, 201), the message including data representing an indication that the victim node (101, 209) intends to schedule full-duplex communication with a pair of UEs (103, 105; 211, 215) using a selected one of the multiple frequency resources, wherein the aggressor node (109, 201), on the basis of the IIM message (303), is operable to:
decrease transmission power or cease transmission for a predetermined period of time to a scheduled pair of UEs (111, 115; 203, 205) served by the aggressor node (109, 201) in the selected frequency resource, or share scheduling information and data to be scheduled with the victim node (101, 209);
wherein the victim node (101, 209) is operable to use the scheduling information and data to be scheduled (119, 219) to enable interference cancellation for DL-UL interference generated by the aggressor node (109, 201).

10. A network as claimed in claim 9, wherein the victim node (101, 209) is operable to use the scheduling information and data to be scheduled (119, 219) at the victim node (101, 209) to estimate a channel activity in the selected frequency resource.

11. A network as claimed in claim 9 or 10, wherein the scheduling information and data to be scheduled (119, 219) is transmitted from the aggressor node (109, 201) to the victim node (101, 209) using a wireless or wired connection between the nodes.

12. A network as claimed in any of claims 9 to 11, wherein the victim node (101, 209) is operable to measure received power in respective ones of the multiple frequency resources, and to determine the presence of an acceptable frequency resource; and, on the basis of the determination, schedule full-duplex communication with a pair of half-duplex UEs in the acceptable frequency resource.

13. A full-duplex capable node (101, 209) in a heterogeneous telecommunications network operable to transmit and receive using the same frequency bands at the same time so as to provide full-duplex communication, using multiple frequency resources, to serve pairs of UEs, wherein the node (101, 209) is operable to:
transmit an interference indicator message, IIM, (303) to an aggressor node (109, 201) of the network including data representing an indication that the node intends to schedule full-duplex communication with a pair of UEs (103, 105; 211, 215) using a selected one of the multiple frequency resources; and
receive scheduling information and data to be scheduled from the aggressor node (109, 201) so as to enable interference cancellation for DL-UL interference generated by the aggressor node (109, 201).

14. A full-duplex capable node in a heterogeneous telecommunications network operable to transmit and receive using the same frequency bands at the same time so as to provide full-duplex communication, using multiple frequency resources, to serve pairs of UEs, wherein the node is operable to:
receive an interference indicator message, IIM, including data representing an indication that a victim node (101, 209) of the network intends to schedule full-duplex communication with a pair of UEs (103, 105; 211, 215) using a selected one of the multiple frequency resources; and
decrease transmission power or cease transmission for a predetermined period of time to a scheduled pair of UEs (111, 115; 203, 205) in the selected frequency resource, or transmit scheduling information and data to be scheduled (119, 219) to the victim node (101, 209) to enable interference cancellation for DL-UL interference generated by the node.

15. A computer program product, comprising a computer usable medium having computer readable program code embodied therein, said computer readable program code adapted to be executed to implement a method for mitigating DL-UL interference between an aggressor node (109, 201) and a victim node (101, 209) as claimed in any of claims 1 to 8.

## Patentansprüche

1. Verfahren für ein heterogenes Telekommunikationsnetzwerk zur Abschwächung einer DL-UL-Interferenz zwischen Angreiferknoten (109, 201) und Opferknoten (101, 209), wobei respektive Knoten ausgelegt sind für das Übertragen und Empfangen derselben Frequenzbänder zur selben Zeit und somit für das Bereitstellen von Vollduplex-Kommunikation unter Verwendung multipler Frequenzressourcen für das Bedienen von Paaren von Benutzerendgeräten (UE), wobei das Verfahren umfasst:
Übertragen einer Interferenzangabenachricht (IIM, 303) vom Opferknoten (101, 209) an den Angreiferknoten (109, 201), welche Daten enthält, die angeben, dass der Opferknoten (101, 209) versucht, unter Verwendung einer ausgewählten der besagten multiplen Frequenzressourcen Vollduplex-Kommunikation mit einem Paar von UEs (103, 105; 211, 215) einzuplanen, wobei der Angreiferknoten (109, 201) auf der Grundlage der IIM-Nachricht (303) dafür ausgelegt ist, die Übertragungsleistung zu senken oder die Übertragung an ein eingeplantes Paar von UEs (111, 115; 203, 205), die von dem Angreiferknoten (109, 201) auf in der ausgewählten Frequenzressource bedient werden, für einen vordefinierten Zeitraum einzustellen, oder aber dafür, Planungsinformationen und zu planende Daten (119, 219) mit dem Opferknoten (101, 209) zu teilen, um dadurch eine Interferenzunterdrückung für die DL-UL-Interferenz zu aktivieren, die von dem Angreiferknoten (109, 201) erzeugt wird.

2. Verfahren nach Anspruch 1, weiterhin die Verwendung der Planungsinformationen und der zu planenden Daten (119, 219) am Opferknoten (101, 209) für die Abschätzung einer Kanalaktivität in der ausgewählten Frequenzressource umfassend.

3. Verfahren nach Anspruch 1 oder 2, wobei die Planungsinformationen und die zu planenden Daten (119, 219) über eine drahtlose Verbindung oder eine Verdrahtung zwischen den Knoten vom Angreiferknoten (109, 201) zum Opferknoten (101, 209) übertragen werden.

4. Verfahren nach einem beliebigen der vorgenannten Ansprüche, wobei der Angreiferknoten (109, 201) dafür ausgelegt ist, um auf den Empfang der vom Opferknoten (101, 209) übertragenen IIM-Nachricht (303) mit einer Anfragenachricht für eine Interferenzunterdrückung (305) zu antworten.

5. Verfahren nach einem beliebigen der vorstehenden Ansprüche, weiterhin umfassend:
das am Opferknoten (101, 209) erfolgende Messen der empfangenen Leistung in den jeweiligen der multiplen Frequenzressourcen zwecks Bestimmung der Präsenz einer akzeptablen Frequenzressource; und auf der Grundlage dieser Bestimmung die Planung einer Vollduplex-Kommunikation mit einem Paar von UEs in der akzeptablen Frequenzressource.

6. Verfahren nach Anspruch 5, wobei eine akzeptable Frequenzressource als eine solche Frequenzressource definiert wird, in welcher ein Maß, welches für eine gemessene empfangene Leistung für die Ressource steht, niedriger ist als ein vordefinierter Grenzwert oder in welchem das Empfangssignal-zu-Interferenz-plus-Rausch-Verhältnis (SINR) für ein UE des Paars über einem Grenzwert liegt.

7. Verfahren nach einem beliebigen der vorstehenden Ansprüche, weiterhin das Abschätzen des Kanals zwischen den Knoten unter Verwendung der Planungsinformationen und der zu planenden Daten verwendend, um die Interferenzunterdrückung zu aktivieren.

8. Verfahren nach einem beliebigen der vorstehenden Ansprüche, weiterhin die Verwendung ausgewählter der multiplen Antennenelemente eines Angreiferknotens (109, 201, 401, 501) zwecks Modifizierung eines DL-Übertragungsprofils des Knotens umfassend, um dadurch die Interferenzauswirkungen der UL-Übertragung auf den Opferknoten (101, 209, 405, 505) abzuschwächen.

9. Heterogenes Telekommunikationsnetzwerk, einen Angreiferknoten (109, 201) und einen Opferknoten (101, 209) umfassend, wobei respektive Knoten ausgelegt sind für das Übertragen und Empfangen unter Verwendung derselben Frequenzbänder zur selben Zeit und somit für das Bereitstellen von Vollduplex-Kommunikation unter Verwendung multipler Frequenzressourcen für das Bedienen von Paaren von Benutzerendgeräten (UE), wobei der Opferknoten (101, 209) ausgelegt ist für:
Übertragen einer Interferenzangabenachricht (IIM, 303) an den Angreiferknoten (109, 201), wobei die Nachricht Daten umfasst, die angeben, dass der Opferknoten (101, 209) versucht, eine Vollduplex-Kommunikation mit einem Paar von UEs (103, 105; 211, 215) zu planen, dabei eine ausgewählte der multiplen Frequenzressourcen verwendend, wobei der Angreiferknoten (109, 201) auf der Grundlage der IIM-Nachricht (303) ausgelegt ist für:
die Senkung der Übertragungsleistung oder das Einstellen der Übertragung an ein Paar von UEs (111, 115; 203, 205), die vom Angreiferknoten (109, 201) in der ausgewählten Frequenzressource bedient werden, für einen vordefinierten Zeitraum, oder für das Teilen der Planungsinformationen und zu planenden Daten mit dem Opferknoten (101, 209);
wobei der Opferknoten (101, 209) ausgelegt ist für die Benutzung der Planungsinformationen und zu planenden Daten (119, 219), um die Interferenzunterdrückung für DL-UL-Interferenzen zu aktivieren, die vom Angreiferknoten (109, 201) verursacht werden.

10. Netzwerk nach Anspruch 9, wobei der Opferknoten (101, 209) ausgelegt ist für die Verwendung der Planungsinformationen und der zu planenden Daten (119, 219) am Opferknoten (101, 209) für die Abschätzung einer Kanalaktivität in der ausgewählten Frequenzressource.

11. Netzwerk nach Anspruch 9 oder 10, wobei die Planungsinformationen und die zu planenden Daten (119, 219) über eine drahtlose Verbindung oder eine Verdrahtung zwischen den Knoten vom Angreiferknoten (109, 201) zum Opferknoten (101, 209) übertragen werden.

12. Netzwerk nach Anspruch 9 oder 11, wobei der Opferknoten (101, 209) ausgelegt ist für das Messen der empfangenen Leistung in den jeweiligen der multiplen Frequenzressourcen zwecks Bestimmung der Präsenz einer akzeptablen Frequenzressource; und auf der Grundlage dieser Bestimmung für die Planung einer Vollduplex-Kommunikation mit einem Paar von Halbduplex-UEs in der akzeptablen Frequenzressource.

13. Vollduplexfähiger Knoten (101, 209) in einem Heterogenem Telekommunikationsnetzwerk, ausgelegt für das Übertragen und Empfangen unter Verwendung derselben Frequenzbänder zur selben Zeit und somit für das Bereitstellen von Vollduplex-Kommunikation unter Verwendung multipler Frequenzressourcen für das Bedienen von Paaren von Benutzerendgeräten (UE), wobei der Knoten (101, 209) ausgelegt ist für:
Übertragen einer Interferenzangabenachricht (IIM, 303) an einen Angreiferknoten (109, 201) des Netzwerks, wobei die Nachricht Daten umfasst, die angeben, dass der Knoten versucht, eine Vollduplex-Kommunikation mit einem Paar von UEs (103, 105; 211, 215) zu planen, dabei eine ausgewählte der multiplen Frequenzressourcen verwendend; und
Empfangen von Planungsinformationen und zu planenden Daten von dem Angreiferknoten (109, 201), um die Interferenzunterdrückung für DL-UL-Interferenzen zu aktivieren, die vom Angreiferknoten (109, 201) erzeugt werden.

14. Vollduplexfähiger Knoten in einem Heterogenem Telekommunikationsnetzwerk, ausgelegt für das Übertragen und Empfangen unter Verwendung derselben Frequenzbänder zur selben Zeit und somit für das Bereitstellen von Vollduplex-Kommunikation unter Verwendung multipler Frequenzressourcen für das Bedienen von Paaren von Benutzerendgeräten (UE), wobei der Knoten ausgelegt ist für:
Empfang einer Interferenzangabenachricht (IIM), wobei die Nachricht Daten umfasst, die angeben, dass ein Opferknoten (101, 209) des Netzwerks versucht, eine Vollduplex-Kommunikation mit einem Paar von UEs (103, 105; 211, 215) zu planen, dabei eine ausgewählte der multiplen Frequenzressourcen verwendend; und
für die Senkung der Übertragungsleistung oder das Einstellen der Übertragung an ein Paar von UEs (111, 115; 203, 205) in der ausgewählten Funkressource für einen vordefinierten Zeitraum oder für das Übertragen von Planungsinformationen und zu planenden Daten (119, 219) an den Opferknoten (101, 209) zwecks Aktivierung der Interferenzunterdrückung für die von dem Knoten erzeugte DL-UL-Interferenz.

15. Computerprogramm-Produkt, ein caroputerausführbares Medium mit einem computerlesbaren Programm umfassend, wobei besagtes computerlesbares Programm dafür ausgelegt ist, um zum Zweck des Implementierens eines Verfahrens für die Abschwächung der DL-UL-Interferenz zwischen einem Angreiferknoten (109, 201) und einem Opferknoten (101, 209) nach den Ansprüchen 1 bis 8.

## Revendications

1. Procédé, dans un réseau de télécommunications hétérogène, pour atténuer l'interférence DL-UL entre des noeuds agresseur (109, 201) et victime (101, 209), des noeuds respectifs exploitables pour émettre et recevoir en utilisant les mêmes bandes de fréquences en même temps afin de fournir une communication duplex intégral, en utilisant de multiples ressources de fréquences, pour desservir des paires d'UE, le procédé incluant :
la transmission d'un message d'indicateur d'interférence, IIM, (303) du noeud victime (101, 209) au noeud agresseur (109, 201) incluant des données représentant une indication selon laquelle le noeud victime (101, 209) a l'intention de planifier une communication duplex intégral avec une paire d'UE (103, 105 ; 211, 215) en utilisant une ressource sélectionnée des multiples ressources de fréquences, dans lequel le noeud agresseur (109, 201), sur la base du message IIM (303), est exploitable pour diminuer la puissance de transmission ou cesser la transmission pendant une période de temps prédéterminée vers une paire planifiée d'UE (111, 115 ; 203, 205) desservie par le noeud agresseur (109, 201) dans la ressource de fréquence sélectionnée, ou partager des informations de planification et des données devant être planifiées (119, 219) avec le noeud victime (101, 209) de manière à permettre l'annulation d'interférence pour l'interférence DL-UL générée par le noeud agresseur (109, 201).

2. Procédé selon la revendication 1, incluant en outre, l'utilisation des informations de planification et des données devant être planifiées (119, 219) au niveau du noeud victime (101, 209) pour estimer une activité de canal dans la ressource de fréquence sélectionnée.

3. Procédé selon la revendication 1 ou 2, dans lequel les informations de planification et les données devant être planifiées (119, 219) sont transmises du noeud agresseur (109, 201) au noeud victime (101, 209) en utilisant une connexion sans fil ou filaire entre les noeuds.

4. Procédé selon l'une quelconque des revendications précédentes, dans lequel le noeud agresseur (109, 201) est exploitable pour répondre à la réception du message IIM (303) transmis à partir du noeud victime (101, 209) avec un message de demande d'utilisation d'annulation d'interférence (305).

5. Procédé selon l'une quelconque des revendications précédentes, incluant en outre :
la mesure, au niveau du noeud victime (101, 209), de la puissance reçue dans des ressources respectives des multiples ressources de fréquences pour déterminer la présence d'une ressource de fréquence acceptable ; et, sur la base de la détermination,
la planification d'une communication duplex intégral avec une paire d'UE dans la ressource de fréquence acceptable.

6. Procédé selon la revendication 5, dans lequel une ressource de fréquence acceptable est déterminée comme une ressource de fréquence dans laquelle une mesure représentant la puissance reçue mesurée pour la ressource est inférieure à une valeur de seuil prédéterminée, ou dans laquelle le SINR pour un UE de la paire est supérieur à une valeur de seuil.

7. Procédé selon l'une quelconque des revendications précédentes, incluant en outre l'estimation du canal entre les noeuds en utilisant les informations de planification et les données devant être planifiées de manière à permettre l'annulation d'interférence.

8. Procédé selon l'une quelconque des revendications précédentes, comprenant en outre l'utilisation d'éléments sélectionnés de multiples éléments d'antenne d'un noeud agresseur (109, 201, 401, 501) pour modifier un profil de transmission DL du noeud de manière à atténuer les effets d'interférence de la transmission UL sur le noeud victime (101, 209, 405, 505).

9. Réseau de télécommunications hétérogène incluant un noeud agresseur (109, 201) et un noeud victime (101, 209), des noeuds respectifs exploitables pour émettre et recevoir en utilisant les mêmes bandes de fréquences en même temps afin de fournir une communication duplex intégral, en utilisant de multiples ressources de fréquences, pour desservir des paires d'UE, dans lequel le noeud victime (101, 209) est exploitable pour :
transmettre un message d'indicateur d'interférence, IIM, (303) au noeud agresseur (109, 201), le message incluant des données représentant une indication selon laquelle le noeud victime (101, 209) a l'intention de planifier une communication duplex intégral avec une paire d'UE (103, 105 ; 211, 215) en utilisant une ressource sélectionnée des multiples ressources de fréquences, dans lequel le noeud agresseur (109, 201), sur la base du message IIM (303), est exploitable pour :
diminuer la puissance de transmission ou cesser la transmission pendant une période de temps prédéterminée vers une paire planifiée d'UE (111, 115 ; 203, 205) desservie par le noeud agresseur (109, 201) dans la ressource de fréquence sélectionnée, ou partager des informations de planification et des données devant être planifiées avec le noeud victime (101, 209) ;
dans lequel le noeud victime (101, 209) est exploitable pour utiliser les informations de planification et les données devant être planifiées (119, 219) pour permettre l'annulation d'interférence pour l'interférence DL-UL générée par le noeud agresseur (109, 201).

10. Réseau selon la revendication 9, dans lequel le noeud victime (101, 209) est exploitable pour utiliser les informations de planification et les données devant être planifiées (119, 219) au niveau du noeud victime (101, 209) pour estimer une activité de canal dans la ressource de fréquence sélectionnée.

11. Réseau selon la revendication 9 ou 10, dans lequel les informations de planification et les données devant être planifiées (119, 219) sont transmises du noeud agresseur (109, 201) au noeud victime (101, 209) en utilisant une connexion sans fil ou filaire entre les noeuds.

12. Réseau selon l'une quelconque des revendications 9 à 11, dans lequel le noeud victime (101, 209) est exploitable pour mesurer la puissance reçue dans des ressources respectives des multiples ressources de fréquences, et pour déterminer la présence d'une ressource de fréquence acceptable ; et, sur la base de la détermination, planifier une communication duplex intégral avec une paire d'UE semi-duplex dans la ressource de fréquence acceptable.

13. Noeud à capacité duplex intégral (101, 209) dans un réseau de télécommunications hétérogène exploitable pour émettre et recevoir en utilisant les mêmes bandes de fréquences en même temps afin de fournir une communication duplex intégral, en utilisant de multiples ressources de fréquences, pour desservir des paires d'UE, dans lequel le noeud (101, 209) est exploitable pour :
transmettre un message d'indicateur d'interférence, IIM, (303) à un noeud agresseur (109, 201) du réseau incluant des données représentant une indication selon laquelle le noeud a l'intention de planifier une communication duplex intégral avec une paire d'UE (103, 105 ; 211, 215) en utilisant une ressource sélectionnée des multiples ressources de fréquences ; et
recevoir des informations de planification et des données devant être planifiées en provenance du noeud agresseur (109, 201) afin de permettre l'annulation d'interférence pour l'interférence DL-UL générée par le noeud agresseur (109, 201).

14. Noeud à capacité duplex intégral dans un réseau de télécommunications hétérogène exploitable pour émettre et recevoir en utilisant les mêmes bandes de fréquences en même temps afin de fournir une communication duplex intégral, en utilisant de multiples ressources de fréquences, pour desservir des paires d'UE, dans lequel le noeud est exploitable pour :
recevoir un message d'indicateur d'interférence, IIM, incluant des données représentant une indication selon laquelle un noeud victime (101, 209) du réseau a l'intention de planifier une communication duplex intégral avec une paire d'UE (103, 105 ; 211, 215) en utilisant une ressource sélectionnée des multiples ressources de fréquences ; et
diminuer la puissance de transmission ou cesser la transmission pendant une période de temps prédéterminée vers une paire planifiée d'UE (111, 115 ; 203, 205) dans la ressource de fréquence sélectionnée, ou transmettre des informations de planification et des données devant être planifiées (119, 219) au noeud victime (101, 209) pour permettre l'annulation d'interférence pour l'interférence DL-UL générée par le noeud.

15. Produit de programme informatique, comprenant un support utilisable par ordinateur sur lequel est incorporé un code de programme lisible par ordinateur, ledit code de programme lisible par ordinateur adapté pour être exécuté pour mettre en oeuvre un procédé pour atténuer l'interférence DL-UL entre un noeud agresseur (101, 209) et un noeud victime (101, 209) selon l'une quelconque des revendications 1 à 8.
